# EUROPÄISCHE PATENTSCHRIFT

(11) **EP 1 964 496 B1**
(45) Veröffentlichungstag und Bekanntmachung des Hinweises auf die Patenterteilung: **22.06.2011**
(21) Anmeldenummer: 08101284.1
(22) Anmeldetag: 05.02.2008
(51) Int. Cl.: A47J 31/54, F24H 9/20

(54) **Durchlauferhitzer**
Percolator
Chauffe-eau instantané

(30) Priorität: 27.02.2007 DE 202007002963 U
(43) Veröffentlichungstag der Anmeldung: 03.09.2008
(60) Teilanmeldung: 09161109.5
(73) Patentinhaber: MELITTA HAUSHALTSPRODUKTE GmbH & Co. Kommanditgesellschaft, 32427 Minden (DE)
(72) Erfinder: Sachtleben, Andreas, 32427 Minden (DE); Chuen, Wong Yat, Hung Hom, Kowloon (HK)
(74) Vertreter: Dantz, Jan Henning

(56) Entgegenhaltungen:
- EP-A- 0 881 859
- DE-A1- 2 552 625
- DE-A1- 4 023 920
- DE-A1- 4 023 921
- DE-A1- 4 240 840
- FR-A- 2 530 110

## Beschreibung

Die vorliegende Erfindung betrifft einen Durchlauferhitzer, insbesondere für Kaffeemaschinen, mit einem Fluid führenden Rohr aus einem wärmeleitfähigen Material, das mit einem Heizelement verbunden ist.

Es sind Durchlauferhitzer für Kaffeemaschinen bekannt, bei denen das Brühwasser in einem Heizrohr über ein benachbart angeordnetes rohrförmiges Heizelement aufgeheizt wird und dann über eine Brause im erhitzten Zustand ausgegeben wird. Um eine Überhitzung zu vermeiden, ist an dem Heizrohr ein Thermostat mit einer Kontaktplatte angebracht, wobei für die Montage das runde Heizrohr entweder mit einer angeschweißten Lasche versehen oder verprägt wird, um eine ausreichend ebene Verbindung mit der Kontaktplatte zu erhalten. Dieser zusätzliche Arbeitsgang des Verschweißens oder Verprägens ist einerseits aufwendig und andererseits führt dies dazu, dass ungenügend ebene Anlageflächen vorhanden sind/entstehen. Zudem ist die Energiespeicherkapazität der vorbekannten Durchlauferhitzer begrenzt.

Die FR 2 530 110 offenbart einen Durchlauferhitzer mit einem Rohr, an dem ein als Formteil ausgebildetes Heizelement montiert ist. An dem Formteil ist ein Bimetallstreifen angeordnet, der mit einem Verbindungsstück gekoppelt ist, um ein Schalten an stromführenden Kontaktelementen zu bewirken.

Die DE 42 40 840 offenbart einen elektrischen Durchlauferhitzer, bei dem das Durchlaufrohr zusammen mit einem Rohrheizkörper in einem zusätzlichen Strangpressteil angeordnet ist. An dem Strangpressteil ist eine ebene Fläche zur Befestigung eines Temperaturreglers vorgesehen.

Ferner offenbart die DE 40 23 921 einen Durchlauferhitzer für eine Maschine zur Herstellung von Brühgetränken mit einem elektrisch betriebenen Heizkörper, der ein zum Aufheizen eines Wasserrohres dient. Wasserrohr und Heizkörper sind für eine gute Wärmeleitfähigkeit über Stege miteinander verbunden.

Es ist daher Aufgabe der vorliegenden Erfindung einen Durchlauferhitzer zu schaffen, der einfach herstellbar ist und die Wärmeenergie optimal nutzt.

Diese Aufgabe wird mit einem Durchlauferhitzer mit den Merkmalen des Anspruches 1 gelöst.

Erfindungsgemäß weist das Fluid führende Rohr eine ebene Fläche auf, an der ein Thermostat montiert ist. Dadurch kann der Durchlauferhitzer montiert werden, ohne dass der Arbeitsschritt des Verprägens des Heizrohres vorgenommen werden muss, da die ebene Fläche schon bei der Herstellung beim Extrudieren des Rohres. vorgesehen wird.

Gemäß einer bevorzugten Ausführungsform ist die ebene Fläche an einer Innenseite des bogenförmig gekrümmten Durchlauferhitzers angeordnet, so dass auch der Thermostat innen angeordnet ist und ein kompakter Aufbau gewährleistet wird. Die ebene Fläche kann dabei durch zwei im Eckbereich angeordnete Materialverdickungen gebildet sein, so dass diese Materialverdickungen als zusätzlicher Energiespeicher zur Verfügung stehen. Ferner kann das Fluid führende Rohr benachbart zu der ebenen Fläche und den Materialverdickungen mit gleichmäßiger Wandstärke im Querschnitt ringförmig ausgebildet sein, so dass das Rohr noch biegbar bleibt und der Materialaufwand begrenzt ist.

Gemäß einer bevorzugten Ausgestaltung der Erfindung sind das Fluid führende Rohr sowie ein Gehäuse des Heizelementes über einen Verbindungssteg miteinander verbunden, so dass eine gute Wärmeleitfähigkeit gewährleistet ist. Dabei können das Fluid führende Rohr und das Gehäuse des Heizelementes integral aus einem Metall, vorzugsweise aus einem extrudiertem Aluminiumprofil, hergestellt sein. Dadurch kann die Einheit aus Heizelement und Fluid führendem Rohr besonders einfach montiert werden.

Gemäß einer weiteren Ausgestaltung ist an dem Durchlauferhitzer an dem Heizelement auf der zu dem Fluid führenden Rohr gewandten Seite eine Materialverdickung als Energiespeicher vorgesehen. Dadurch können die Heizintervalle des Heizelementes verlängert werden, was die Lebensdauer verlängert.

Vorzugsweise ist durch die Materialverdickung an dem Heizelement an einer Seite eine ebene Fläche ausgebildet, die sich parallel zu einer ebenen Fläche an dem Fluid führenden Rohr mit dem Thermostaten erstreckt, insbesondere können die beiden ebenen Flächen zudem auf einer gemeinsamen Ebene angeordnet sein.

Die Erfindung wird nachfolgend anhand eines Ausführungsbeispieles mit Bezug auf die beigefügten Zeichnungen näher erläutert. Es zeigen:

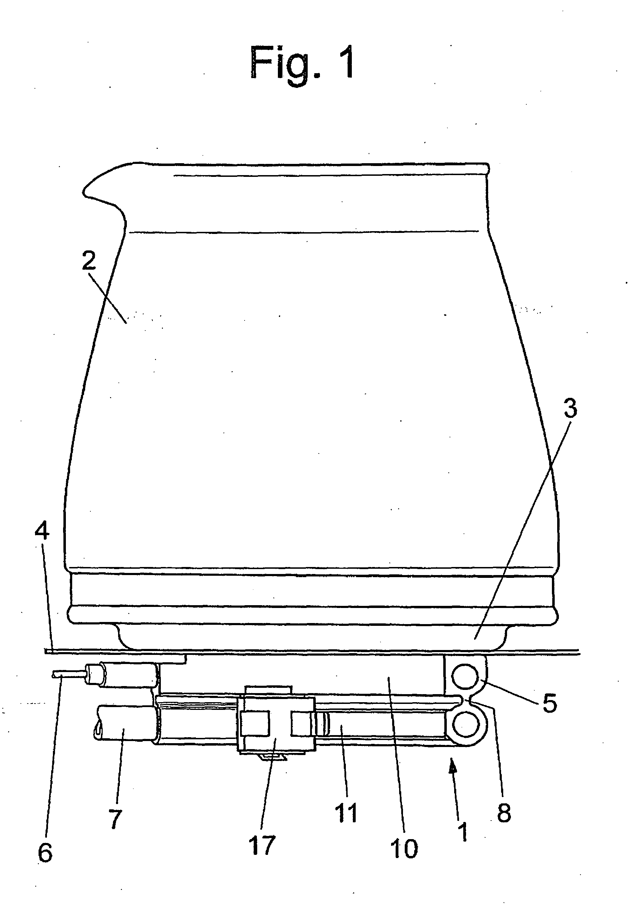

- Figur 1: eine Seitenansicht eines erfindungsgemäßen Durchlauferhitzers im montierten Zustand;
- Figur 2: eine Detailansicht der Einheit des Heizelementes und des Fluid führenden Rohres im Schnitt, und
- Figur 3: eine Detailansicht eines Thermostaten an dem Fluid führenden Rohr.

An einem Durchlauferhitzer 1 ist eine Kanne 2 zum Warmhalten eines Brühgetränkes, insbesondere Kaffee vorgesehen, die mit einem Boden 3 auf einer Warmhalteplatte 4 abgestellt ist. Unterhalb der Warmhalteplatte 4 ist ein Körper 5 mit einem Heizelement 6 und einem Fluid führenden Rohr 7 angeordnet, die über einen integral ausgebildeten Verbindungssteg 8 miteinander verbunden sind. Der Körper 5 bildet zudem einen Wärmeleiter und Energiespeicher, so dass beim Aufheizen des Heizelementes 6 zum Erwärmen von Wasser in dem Fluid führenden Rohr 7 gleichzeitig auch die Warmhalteplatte 4 erhitzt wird. Der Körper 5 ist dabei bogenförmig in Form eines Hufeisens ausgebildet und ist zumindest in dem Bereich unterhalb der Warmhalteplatte 4 angeordnet. Auch eine mäanderformig Gestaltung des Körpers 5 ist möglich.

Der Körper 5 ist aus einem extrudierten Aluminiumprofil hergestellt, das zunächst als gerades Profil hergestellt und anschließend gebogen wird.

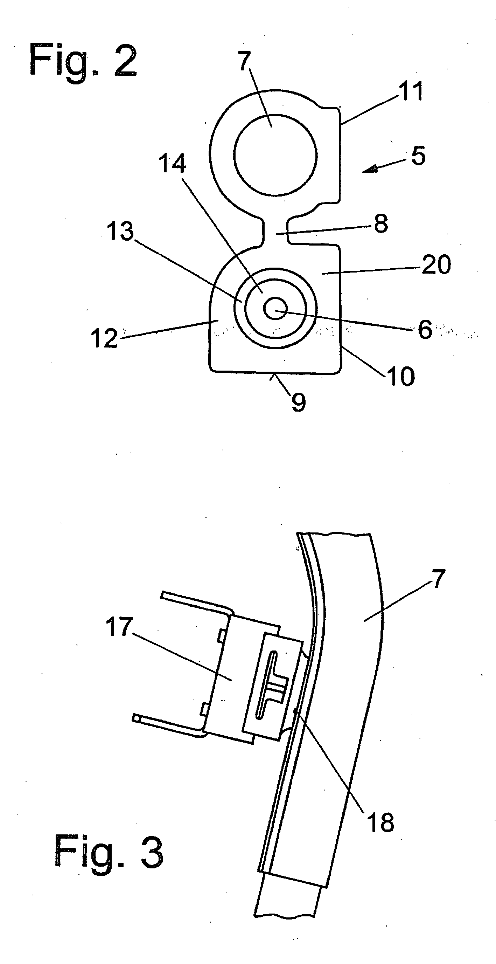

In Figur 2 ist der Körper 5 im Querschnitt dargestellt. Das Heizelement 6 ist aus einem Widerstandsdraht gebildet, der von einer Isolierung 14 und einer Ummantelung 13, vorzugsweise einem Kupferrohr umgeben ist. Über das Heizelement 6 wird Wärme an ein Gehäuse 12 abgegeben, das durch den Körper 5 gebildet ist.

An der zu dem Fluid führenden Rohr 7 abgewandten Seite des Heizelementes 6 ist eine ebene Fläche 9 ausgebildet, an der die Warmhalteplatte 4 anliegt.

An dem Heizelement 6 ist ferner auf der zu dem Fluid führenden Rohr 7 gewandten Seite eine Materialverdickung 20 als Energiespeicher vorgesehen. Durch die Materialverdickung 20 wird auf einer Innenseite des Körpers 5 eine ebene Fläche 10 ausgebildet.

Ferner ist an dem Körper 5 benachbart zu dem Fluid führenden Rohr 7 eine weitere ebene Fläche 11 ausgebildet. An der ebenen Fläche 11 ist ein Thermostat 17 montiert, der mit einer ebenen Platte 18 an der Fläche 11 anliegt. Wenn das Heizelement 6 erhitzt wird, erwärmt sich der Körper 5 und Wärmeenergie wird über den Verbindungssteg 8 zu dem Fluid führenden Rohr 7 geleitet. Wenn in dem Fluid führenden Rohr 7 kein Wasser zur Kühlung vorhanden ist, muss dafür gesorgt werden, dass der Durchlauferhitzer nicht weiter aufgeheizt wird. Hierfür dient der Thermostat 17, der ein Bi-Metallelement enthält, das bei Erreichen einer bestimmten Temperatur sich selbständig mechanisch verformt. Diese Verformung wird dazu genutzt, den Stromkreis zu trennen. Bei Überschreiten einer vorbestimmten Temperatur wird somit das Heizelement 6 abgeschaltet, bis durch eine Abkühlung wieder eine Rückverformung des Bi-Metallelementes stattgefunden hat.

In dem gezeigten Ausführungsbeispiel ist das Heizelement 6 zwischen der Warmhalteplatte 4 und dem Fluid führenden Rohr 7 angeordnet. Es ist natürlich auch möglich, statt das Heizelement 6 und das Rohr 7 nicht vertikal übereinander sondern horizontal nebeneinander anzuordnen.

Das Heizelement 6 umfasst als ergänzenden Wärmespeicher eine Materialverdickung 20 benachbart zu dem Fluid führenden Rohr 7. Natürlich ist es möglich, auch mehrere Materialverdickungen in Form von Rippen etc. an dem Gehäuse 20 des Heizelements 6 vorzusehen.

## Patentansprüche

1. Durchlauferhitzer, insbesondere für Kaffeemaschinen, mit einem Fluid führenden extrudierten Rohr (7) aus einem wärmeleitfähigen Material, das mit einem Heizelement (6) verbunden ist, **dadurch gekennzeichnet, daß** das Fluid führende extrudierte Rohr (7) eine ebene Fläche (11) aufweist, an der ein Thermostat (17) montiert ist.

2. Durchlauferhitzer nach Anspruch 1, **dadurch gekennzeichnet, dass** die ebene Fläche (11) an einer Innenseite des bogenförmig gekrümmten Durchlauferhitzers (1) angeordnet ist.

3. Durchlauferhitzer nach Anspruch 1 oder 2, **dadurch gekennzeichnet, dass** die ebene Fläche (11) durch zwei im Eckbereich angeordnete Materialverdickungen gebildet ist und das Fluid führende Rohr (7) benachbart zu der ebenen Fläche (11) und den Materialverdickungen mit gleichmäßiger Wandstärke im Querschnitt ringförmig ausgebildet ist.

4. Durchlauferhitzer nach einem der Ansprüche 1 bis 3, **dadurch gekennzeichnet, dass** das Fluid führende Rohr (7) sowie ein Gehäuse (12) des Heizelementes (6) über einen Verbindungssteg (8) miteinander verbunden sind und das Fluid führende Rohr (7) und das Gehäuse (12) des Heizelementes (6) integral aus Metall, vorzugsweise aus Aluminium hergestellt sind.

## Claims

1. A flow-through heater, in particular for coffee machines, comprising:
a liquid-bearing extruded tube (7) made of a heat conductive material connected to a heating element (6), **characterized in that** the liquid-bearing extruded tube (7) having a flat area (11), on which a thermostat (17) is mounted.

2. The flow-through heater according to claim 1, **characterized in that** the flat area (11) is located on an inside area of the curved bow-shaped flow-heater (1).

3. The flow-through heater according to claim 1 or 2, **characterized in that** the liquid-bearing tube (7) has a generally ring-shaped cross section with a uniform wall thickness and including two material enlargements comprising corner regions defining the flat area, the liquid-bearing tube (7) being arranged adjacent to the flat area (11) and the material enlargements.

4. The flow-through heater according to one of claims 1 to 3, **characterized in that** the liquid-bearing tube (7) and a housing (12) of the heating element (6) are connected via a connecting web (8) and wherein the liquid-bearing tube (7) and the housing (12) for the heating element (6) are made integrally of metal, preferably of aluminum.

## Revendications

1. Chauffe-eau instantané, notamment pour machine à café, comportant un tube extrudé (7) traversé par du fluide, le tube étant en une matière thermo-conductrice, relié à un élément chauffant (6),
**caractérisé en ce que**
le tube extrudé (7) traversé par le fluide a une surface plane (11) recevant un thermostat (17).

2. Chauffe-eau instantané selon la revendication 1,
**caractérisé en ce que**
la surface plane (11) est prévue sur le côté intérieur du chauffe-eau instantané (1) cintré en forme d'arc.

3. Chauffe-eau instantané selon la revendication 1 ou 2,
**caractérisé en ce que**
la surface plane (11) est formée par deux épaississements de matière dans une zone de coin et le tube (7) traversé par le fluide au voisinage de la surface (11) et des renforcements de matière, a une forme de section annulaire et une paroi d'épaisseur régulière.

4. Chauffe-eau instantané selon l'une des revendications 1 à 3,
**caractérisé en ce que**
le tube (7) conduisant le fluide ainsi qu'un boîtier (12) de l'élément chauffant (6) sont reliés par une entretoise de liaison (8) et le tube (7) traversé par le fluide ainsi que le boîtier (12) de l'élément chauffant (6) sont intégralement réalisés en métal, de préférence en aluminium.
